# EUROPÄISCHE PATENTSCHRIFT

(11) **EP 0 563 600 B1**
(45) Veröffentlichungstag und Bekanntmachung des Hinweises auf die Patenterteilung: **25.09.1996**
(21) Anmeldenummer: 93103346.8
(22) Anmeldetag: 03.03.1993
(51) Int. Cl.: H02B 1/40, H02B 1/26

(54) **Gehäuse zum Einbau von elektrischen oder elektronischen Bauteilen bzw. Baugruppen**
Cabinet for installation of electric or electronic components and assemblies
Boîtier pour le montage de composants et assemblages électriques ou électroniques

(30) Priorität: 01.04.1992 DE 9204454 U
(43) Veröffentlichungstag der Anmeldung: 06.10.1993
(73) Patentinhaber: BOPLA GEHÄUSE SYSTEME GmbH, D-32257 Bünde (DE)
(72) Erfinder: Behrendt, Horst, W-4972 Löhne 4 (DE); Krömer, Andreas, W-4900 Herford (DE); Niehausmeier, Uwe, W-4986 Rödinghausen (DE)
(74) Vertreter: Patentanwälte Dipl.-Ing. Bodo Thielking Dipl.-Ing. Otto Elbertzhagen

(56) Entgegenhaltungen:
- DE-A- 1 415 867
- DE-A- 1 640 235
- DE-B- 1 283 937
- DE-U- 8 629 567
- DE-U- 9 204 454
- FR-A- 2 117 905

## Beschreibung

Die Erfindung betrifft ein Gehäuse zum Einbau von elektrischen oder elektronischen Bauteilen bzw. Baugruppen gemäß dem Oberbegriff des Anspruchs 1.

Bei bekannten derartigen Gehäusen (DE-U 86 29 567) ist es in verschiedenen Anwendungsfällen erwünscht, daß es nicht einfach möglich ist, vom Klemmenanschlußraum in den Montageraum zu gelangen. Außerdem besteht gelegentlich das Bedürfnis, innerhalb des Klemmenanschlußraums zusätzliche Platinen vorzusehen.

Ausgehend von diesem Stand der Technik liegt der Erfindung die Aufgabe zugrunde, ein Gehäuse der als bekannt vorausgesetzten Art so auszubilden, daß bei Bedarf die Durchgangsöffnung zwischen Klemmenanschlußraum und Montageraum verschließbar ist und bei Bedarf zusätzliche Platinen in den Klemmenanschlußraum eingebaut werden können.

Die Lösung dieser Aufgabe erfolgt durch die Merkmale des Anspruchs 1.

Bei einer bevorzugten Ausführungsform sind die plattenförmigen Einbauteile Platinen.

Bei einer weiteren zweckmäßigen Ausgestaltung sind die plattenförmigen Einbauteile Trennwände zur Trennung von Klemmenanschlußraum und Montageraum.

Ferner hat es sich als zweckmäßig erwiesen, daß die Einbauteile in Einschublage fixierbar sind.

Vorzugsweise besitzen die plattenförmigen Einbauteile mindestens einen quer zur Einschubrichtung verlaufenden Schenkel.

Das Vorsehen seitlicher Aufnahmenuten erweitert die Anwendungsmöglichkeiten des Gehäuses.

Nachstehend werden bevorzugte Auführungsformen der Erfindung anhand der Zeichnung im einzelnen beschrieben. Es zeigen:
- Figur 1 -: eine perspektivische Darstellung eines Gehäuses mit Klemmenanschlußraum, dessen abnehmbarer Deckel nicht gezeichnet ist,
- Figur 2 -: das Gehäuse gemäß Figur 1 mit einer eingeschobenen Platte,
- Figur 3 -: das Gehäuse gemäß Figur 1 mit einem eingeschobenen Winkelelement,
- Figur 4 -: das Gehäuse gemäß Figur 1 mit einem eingeschobenen, im Querschnitt T-förmigen Plattenelement.

Das insgesamt mit 1 bezeichnete Gehäuse besitzt einen Montageraum 1d, der von einer transparenten Frontabdeckung 1e abgedeckt ist. Neben dem Montageraum 1d befindet sich ein in seiner Höhe geringerer Klemmenanschlußraum 1c, der ebenfalls von einem nicht dargestellten Deckel verschließbar ist. Der Klemmenanschlußraum 1c besitzt eine geringere Höhe als der Montageraum 1d. Die Wand 1a läuft nicht bis zur Rückwand des Gehäuses durch, sondern mündet in eine sich über die gesamte Gehäusebreite erstreckende Durchgangsöffnung 1f. In den Seitenwänden 1b des Klemmenanschlußraums 1c sind parallel zueinander verlaufende, sich senkrecht zu der Rückwand des Gehäuses 1 erstreckende Aufnahmenuten 1d vorgesehen. In den Zeichnungen sind lediglich drei in einer Seitenwand 1b befindliche, zueinander parallele Aufnahmenuten 1d sichtbar. Diesen sichtbaren Aufnahmenuten 1d liegen in entsprechender Anordnung drei Aufnahmenuten in der gegenüberliegenden Seitenwand 1b gegenüber. Dabei ist die Anordnung der Aufnahmenuten so gewählt, daß in diese eingeschobene Einbauteile jeweils parallel zur Wand 1a verlaufen.

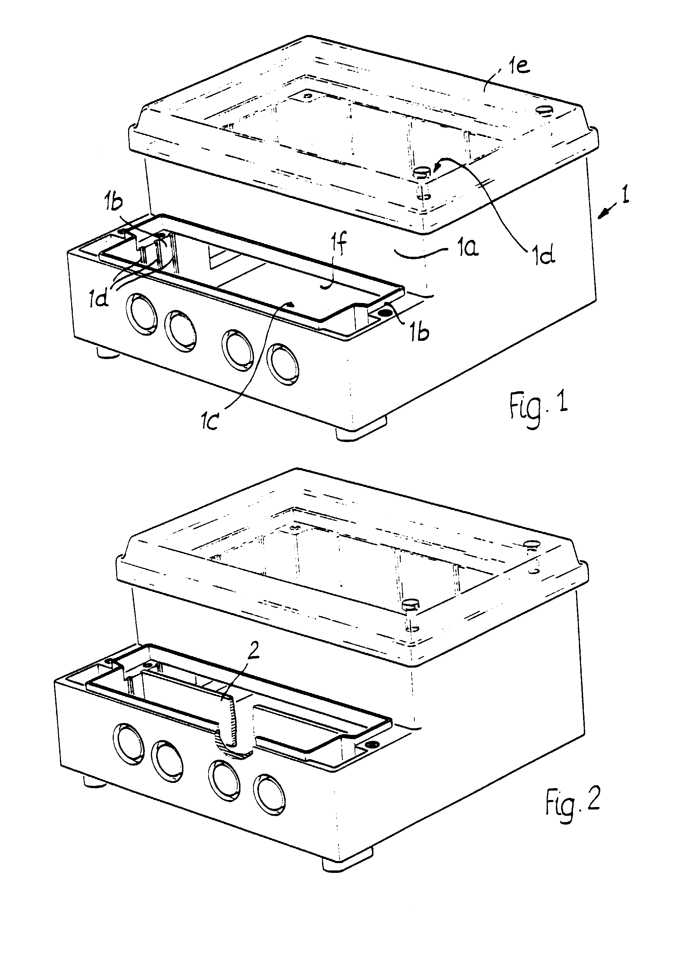

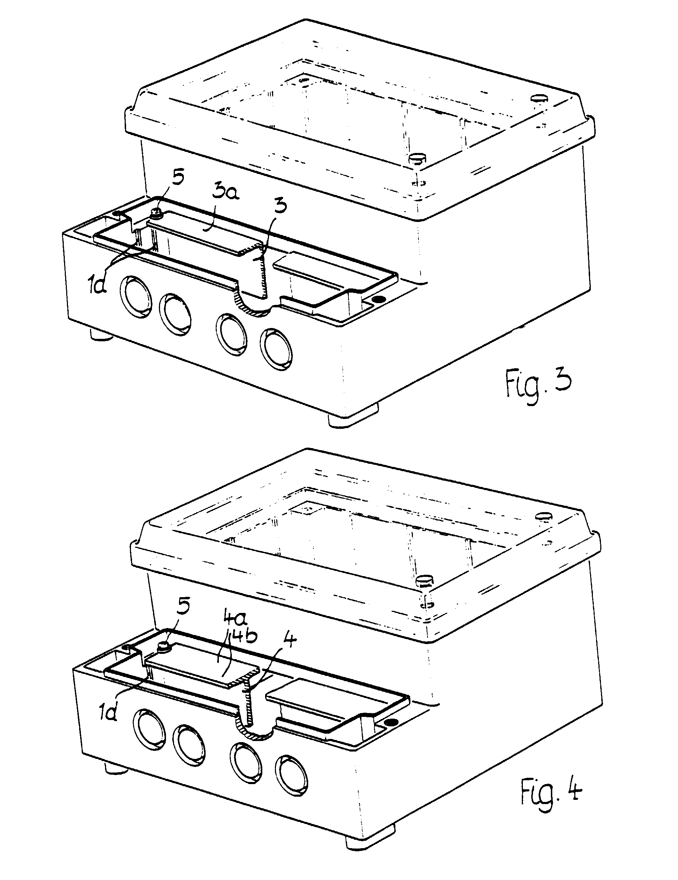

Die Nuten dienen zur Aufnahme plattenförmiger Einbauteile. In Figur 2 ist ein ebenes, plattenförmiges Einbauteil 2 dargestellt, das beispielsweise eine Platine oder eine Trennwand sein kann. Das plattenförmige Element 2 eignet sich auch für Beschriftungen.

In Figur 3 ist ein plattenförmiges Einbauelement 3 dargestellt, das einen horizontal sich erstreckenden Schenkel 3a aufweist. Mit Hilfe mindestens einer Befestigungsschraube 5 ist das plattenförmige Element 3 in seiner Einbaulage arretierbar. Das plattenförmige, mit horizontalem Schenkel 3a versehene Element 3 kann auch so eingebaut werden, daß der Schenkel 3a in Richtung auf die Wand 1a weist.

In Figur 4 ist ein weiteres plattenförmiges Element 4 dargestellt, welches zwei Schenkel 4a und 4b bzw. einen durchgehenden Querschenkel zur Bildung eines T-Profils aufweist. Auch dieses plattenförmige Element 4 ist mit Hilfe mindestens einer Befestigungsschraube 5 in seiner Einbaulage in einer Aufnahmenut 1d gesichert.

Die plattenförmigen Elemente 3 bzw. 4 sind besonders stabil gegen Durchbiegung. Sie eignen sich ideal für Beschriftungen, die auf den horizontal verlaufenden Schenkeln aufgebracht werden können. Sie können so bemessen und angeordnet werden, daß sie den Klemmenanschlußraum weitgehend dicht gegen den Montageraum abschließen.

## Patentansprüche

1. Gehäuse zum Einbau von elektrischen oder elektronischen Bauteilen bzw. Baugruppen mit einem neben einem Montageraum (1d) sich befindlichen Klemmenanschlußraum (1c), der eine geringere Höhe als der Montageraum (1a) und eine über die gesamte Gehäusebreite sich erstreckende Durchgangsöffnung (1f) aufweist,
dadurch gekennzeichnet,
daß eine dem Klemmenanschlußraum (1c) benachbarte Montageraumwand (1a) nicht bis zur Rückwand durchläuft, sondern in die Durchgangsöffnung (1f) mündet, daß die Seitenwände (1b) des Klemmenanschlußraums (1c) einander gegenüberliegende, sich senkrecht zu dessen Rückwand erstreckende Aufnahmenuten (1d) aufweisen, die zur Aufnahme plattenförmiger Einbauteile (2; 3; 4) ausgebildet sind.

2. Gehäuse nach Anspruch 1,
dadurch gekennzeichnet,
daß die plattenförmigen Einbauteile Platinen sind.

3. Gehäuse nach Anspruch 1,
dadurch gekennzeichnet,
daß die plattenförmigen Einbauteile Trennwände (2; 3; 4) zur Trennung von Klemmenanschlußraum (1c) und Montageraum (1d) sind.

4. Gehäuse nach einem oder mehreren der Ansprüche 1 bis 3,
dadurch gekennzeichnet,
daß die plattenförmigen Einbauteile in Einschublage fixierbar sind.

5. Gehäuse nach einem oder mehreren der Ansprüche 1 bis 4,
dadurch gekennzeichnet,
daß die platttenförmigen Einbauteile (3; 4) mindestens einen quer zur Einschubrichtung verlaufenden Schenkel (3a; 4a, 4b) aufweisen.

## Claims

1. Housing for the installation of electrical or electronic component parts or component groups with a terminal connection chamber (1c) mounted next to an assembly chamber (1d) wherein the terminal connection chamber has a lower height than the assembly chamber (1a) and a through opening (1f) extending over the entire housing width,
characterised in that an assembly chamber wall (1a) adjoining the terminal connection chamber (1c) does not run right through to the back wall but opens into the through passage opening (1f), that the side walls (1b) of the terminal connection chamber (1c) have opposing socket grooves (d) which extend at right angles to the back wall and are designed to hold plate-like installation parts (2;3;4).

2. Housing according to claim 1 characterised in that the plate-like installation parts are flat bars.

3. Housing according to claim 1 characterised in that the plate-like installation parts are partition walls (2;3;4) to separate the terminal connection chamber (1c) and assembly chamber (1d).

4. Housing according to one or more of claims 1 to 3 characterised in that the plate-like installation elements are fixable in their inserted position.

5. Housing according to one or more of claims 1 to 4 characterised in that the plate-like installation elements (3;4) have at least one arm (3;4a;4b) running across the insert direction.

## Revendications

1. Boîtier pour le montage de composants et d'assemblages électriques ou électroniques, lequel comprend un compartiment de connexions serrées (1c) placé à côté du compartiment de montage (1d), ce compartiment de connexions serrées (1c) étant de plus faible hauteur que- le compartiment de montage et pourvu d'une ouverture de passage (1f) qui s'étend sur toute la largeur du boîtier,
caractérisé en ce que
une paroi (1a), voisine du compartiment de connexions serrées (1c) ne s'étend pas jusqu'à la paroi arrière, mais aboutit dans l'ouverture de passage (1f) et que les parois latérales (1b) du compartiment de connexions serrées (1c) présentent des rainures de positionnement (1d) qui se font face et s'étendent perpendiculairement à la paroi arrière du compartiment de connexions serrées (1c), ces rainures étant destinées à recevoir des pièces à inserts (2; 3; 4) en forme de plaques.

2. Boîtier selon la revendication 1,
caractérisé en ce que
les inserts en forme de plaques sont des platines.

3. Boîtier selon la revendication 1,
caractérisé en ce que
les inserts en forme de plaques (2; 3; 4) sont des parois destinées à séparer le compartiment de connexions serrées (1c) du compartiment de montage (1d).

4. Boîtier selon une ou plusieurs revendications 1 à 3,
caractérisé en ce que
les inserts en forme de plaques peuvent être fixés dans la position, dans laquelle ils ont été encastrés.

5. Boîtier selon une ou plusieurs revendications 1 à 4,
caractérisé en ce que
les inserts (3; 4) présentent, chacun, au moins une branche (3a, 4a, 4b) qui s'étend transversalement par rapport à la direction d'insertion.
